(19) **Europäisches Patentamt**
**European Patent Office**
**Office européen des brevets**

(11) **EP 4 557 644 A1**

(12) **EUROPEAN PATENT APPLICATION**

(43) Date of publication:
**21.05.2025 Bulletin 2025/21**

(21) Application number: **23210113.9**

(22) Date of filing: **15.11.2023**

(51) International Patent Classification (IPC):
*H04L 1/00* $^{(2006.01)}$

(52) Cooperative Patent Classification (CPC):
**H04L 1/0009; H04L 1/0026; H04L 1/0065**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Technologies Oy
02610 Espoo (FI)**

(72) Inventors:
- **KHOSRAVIRAD, Saeed Reza
Mountainside, NJ 07092 (US)**
- **COSKUN, Mustafa Cemil
New Providence, NJ 07974 (US)**

(74) Representative: **Nokia EPO representatives
Nokia Technologies Oy
Karakaari 7
02610 Espoo (FI)**

(54) **CONCATENATED CHANNEL CODING**

(57) According to an example aspect of the present invention, there is provided an apparatus configured to perform an outer encoding of data based on an outer error-correcting code to obtain an outer codeword, perform an inner encoding of segments of the outer codeword based on an inner error-correcting code to obtain inner codewords, wherein a codeword length of the inner error-correcting code is based at least in part on a channel coherence of a wireless communication channel through which the data are to be sent, and perform a transmission through the wireless communication channel based at least in part on the inner and outer encoding.

| | |
|---|---|
| Performing an outer encoding of data based on an outer error-correcting code to obtain an outer codeword | 510 |
| Performing an inner encoding of segments of the outer codeword based on an inner error-correcting code to obtain inner codewords, wherein a codeword length of the inner error-correcting code is based at least in part on a channel coherence of a wireless communication channel through which the data are to be sent | 520 |
| Performing a transmission through the wireless communication channel based at least in part on the inner and outer encoding | 530 |

**FIGURE 5**

EP 4 557 644 A1

**Description**

FIELD

The present disclosure relates to channel coding, such as, for example, channel coding for communication over a wireless communication channel.

BACKGROUND

Data to be communicated over a wireless channel may be coded in a process known as channel coding. The purpose of channel coding is generally to increase resilience of the communication over the wireless channel, as such a channel is inherently prone to introduce errors into data.

Channel codes may be error-correcting codes, which enable correction of individual bit errors. Alternatively or in addition, such codes may be error-detection codes which enable the detection, but not necessarily the correction, of bit errors. When using codes capable of only error detection, a retransmission of a data block affected by an error may be requested, to obtain in the receiving end a correct version of the data. On the other hand, some applications are inherently error tolerant to a degree and isolated bit errors to not materially affect the functioning of these applications, as long as the error rate is not excessive.

SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core and at least one memory storing instructions that, when executed by the at least one processing core, cause the apparatus at least to perform an outer encoding of data based on an outer error-correcting code to obtain an outer codeword, perform an inner encoding of segments of the outer codeword based on an inner error-correcting code to obtain inner codewords, wherein a codeword length of the inner error-correcting code is based at least in part on a channel coherence of a wireless communication channel through which the data are to be sent, and perform a transmission through the wireless communication channel based at least in part on the inner and outer encoding.

According to a second aspect of the present disclosure, there is provided an apparatus comprising at least one processing core and at least one memory storing instructions that, when executed by the at least one processing core, cause the apparatus at least to perform joint channel estimation and decoding of segments of received modulation symbols based on an inner error-correcting code to obtain channel estimates of a wireless communication channel through which the modulation symbols are received, wherein a codeword length of the inner error-correcting code is based on a channel coherence of the wireless communication channel.

According to a third aspect of the present disclosure, there is provided a method comprising performing an outer encoding of data based on an outer error-correcting code to obtain an outer codeword, performing an inner encoding of segments of the outer codeword based on an inner error-correcting code to obtain inner codewords, wherein a codeword length of the inner error-correcting code is based at least in part on a channel coherence of a wireless communication channel through which the data are to be sent, and performing a transmission through the wireless communication channel based at least in part on the inner and outer encoding.

According to a fourth aspect of the present disclosure, there is provided a method comprising performing joint channel estimation and decoding of segments of received modulation symbols based on an inner error-correcting code to obtain channel estimates of a wireless communication channel through which the modulation symbols are received, wherein a codeword length of the inner error-correcting code is based on a channel coherence of the wireless communication channel.

According to a fifth aspect of the present disclosure, there is provided a non-transitory computer readable medium having stored thereon a set of computer readable instructions that, when executed by at least one processor, cause an apparatus to at least perform an outer encoding of data based on an outer error-correcting code to obtain an outer codeword, perform an inner encoding of segments of the outer codeword based on an inner error-correcting code to obtain inner codewords, wherein a codeword length of the inner error-correcting code is based at least in part on a channel coherence of a wireless communication channel through which the data are to be sent, and perform a transmission through the wireless communication channel based at least in part on the inner and outer encoding.

According to a sixth aspect of the present disclosure, there is provided a non-transitory computer readable medium having stored thereon a set of computer readable instructions that, when executed by at least one processor, cause an apparatus to at least perform joint channel estimation and decoding of segments of received modulation symbols based on an inner error-correcting code to obtain channel estimates of a wireless communication channel through which the modulation symbols are received, wherein a codeword length of the inner error-correcting code is based on a channel coherence of the wireless communication channel.

According to a seventh aspect of the present disclosure, there is provided an apparatus comprising means for performing an outer encoding of data based on an outer error-correcting code to obtain an outer codeword, performing an inner encoding of segments of the outer codeword based on an inner error-correcting code to obtain inner codewords, wherein a codeword length of the inner error-correcting code is based at least in part on a channel coherence of a wireless communication channel through which the data are to be sent, and performing a transmission through the wireless communication channel based at least in part on the inner and outer encoding.

According to an eighth aspect of the present disclosure, there is provided an apparatus comprising means for performing joint channel estimation and decoding of segments of received modulation symbols based on an inner error-correcting code to obtain channel estimates of a wireless communication channel through which the modulation symbols are received, wherein a codeword length of the inner error-correcting code is based on a channel coherence of the wireless communication channel.

BRIEF DESCRIPTION OF THE DRAWINGS

FIGURE 1 illustrates an example system in accordance with at least some embodiments of the present invention;

FIGURE 2A is a flow graph of a process in accordance with at least some embodiments of the present invention;

FIGURE 2B is a flow graph of a process in accordance with at least some embodiments of the present invention;

FIGURE 2C is a flow graph of a process in accordance with at least some embodiments of the present invention;

FIGURE 2D is an example encoding process in accordance with at least some embodiments of the present invention;

FIGURE 3 illustrates an example apparatus capable of supporting at least some embodiments of the present invention;

FIGURE 4 illustrates signalling in accordance with at least some embodiments of the present invention, and

FIGURE 5 is a flow graph of a method in accordance with at least some embodiments of the present invention.

EMBODIMENTS

Herein are described solutions to perform channel coding in at least two layers, such that a first encoding, referred to herein as an outer encoding, encodes data to be transmitted to a receiver, and the resulting outer-encoded codeword is interleaved and segmented, the segments being encoded in a second encoding, referred to herein as an inner encoding, to obtain inner-encoded codewords. A length of these inner codewords is chosen so as to not exceed coherence characteristics of the wireless communication channel over which the data is to be communicated. Thus a technical benefit is obtained from this concatenated coding scheme in enabling at the receiver end a joint channel estimation and decoding, JCED, process of limited complexity. A JCED receiver process in turn improves link throughput by reducing pilot overhead for channel estimation.

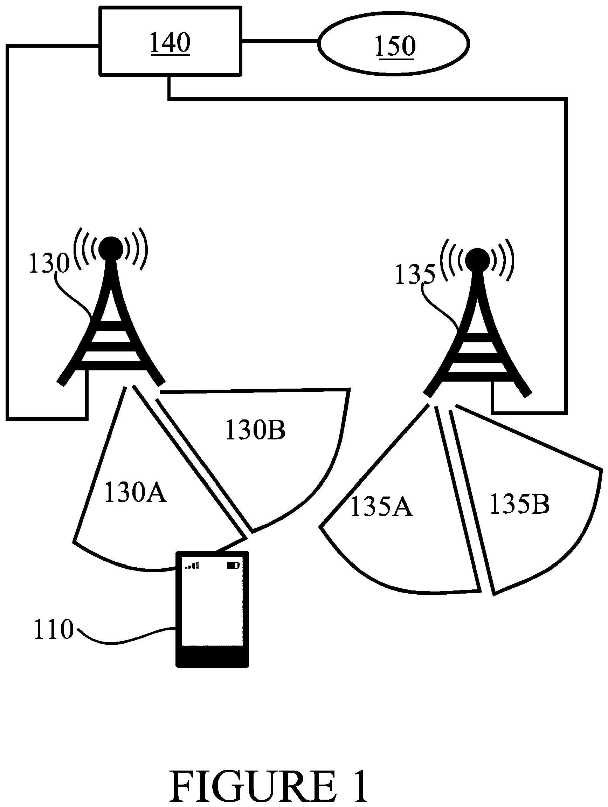

FIGURE 1 illustrates an example system in accordance with at least some embodiments of the present invention. This system includes base stations 130, 135 in communication with UEs, such as UE 110. A radio link connects base station 130 with UE 110. The radio link may be bidirectional, comprising an uplink, UL, to convey information from UE 110 toward base station 130 and a downlink, DL, to convey information from the base station 130 toward UE 110. A cellular communication system may comprise hundreds or thousands of base stations, of which only two are illustrated in FIGURE 1 for the sake of clarity of the illustration. The base stations may be distributed in that they comprise a centralized unit, CU, and one or more distributed unit, DU.

Base station 130 is further coupled communicatively with core network node 140, which may comprise, for example, a mobility management entity, MME, or access and mobility management function, AMF. The core network node 140 may be coupled with further core network nodes, and with a network 150, which may comprise the Internet or a corporate network, for example. The system may communicate with further networks via network 150. Examples of the further core network nodes, which are not illustrated in FIGURE 1 for the sake of clarity, include gateways and subscriber information repositories. Core network nodes may be virtualized in the sense that they may run as software modules on computing substrates, such that more than one virtualized network node may run on a same computing substrate. The network may be configured to function in accordance with a suitable cellular standard such as long term evolution, LTE, fifth generation, 5G, which is also known as New Radio, NR, or sixth generation, 6G standards as defined by the 3$^{rd}$ generation partnership project, 3GPP. To obtain interoperation, UEs attaching to the network are configured to support a same standard as the network. For example, a radio access technology, RAT, in use between UE 110 and base station 130, 135, such as in 5G or 6G, may be based on orthogonal frequency division multiplexing, OFDM.

Base station 130 controls, in the example of FIGURE 1 cells 130A and 130B, of which UE 110 is in the situation illustrated in FIGURE 1 attached with cell 130A, and base station 135 controls, in the example of FIGURE 1, cells 135A and 135B. The number of cells, or beams, may be in excess of what is illustrated in FIGURE 1. It is also possible that a base station has a single cell or beam. While illustrated as sector-shaped, cells of a same base station may be omnidirectional and operate on different frequencies or frequency bands, for example. A mobility event may comprise a switch from one beam to another beam of the same cell, or a switch from one cell to another cell. To support mobility procedures, UEs, including UE 110, are configured to conduct mobility measurements to measure signal strengths of adjacent beams and/or cells, and report results of these measurements to the network, which may then take a decision concerning a mobility event, such as a beam change or a cell switch.

A wireless communication channel, or wireless channel in brief, between a UE and a base station, or between two UEs, exhibits multipath propagation, fading and variance over time.

A channel coherence of the wireless channel comprises a coherence time and a coherence frequency, which together form a coherence block, which may alternatively be referred to as a diversity branch. The coherence time is a time duration over which the channel impulse response of the wireless channel may be considered to be not varying, in other words, the coherence time is the time duration over which two received signals have a strong potential for amplitude correlation. Variations of the wireless channel over time are caused by movement of the UE, and also by movement of nearby objects, since the way these objects reflect and block electromagnetic waves changes as the objects move. In general the faster the UE moves, the faster the wireless channel changes, and the shorter is the span of time during which the wireless channel remains roughly constant. Also, noise and interference introduce variability to a wireless channel as a function of time. The coherence frequency, on the other hand, is an extent in frequency space over which the wireless channel is considered to be constant. The coherence frequency typically depends on the so-called delay spread of the wireless channel, which is the number of channel taps (corresponding to different propagation paths) in a channel impulse response of the wireless channel: the longer the delay spread, the shorter the coherence frequency. When OFDM is used, the coherence time may be expressed in the time domain as a number of OFDM symbols, and the coherence frequency may be expressed in frequency domain as a number of physical frequency resources of the OFDM system, such as a number of physical resource blocks, PRBs, or a number of PRB bundles (blocks of PRBs of pre-defined size). In a scalar block-fading channel, the channel coefficient $H$ remains constant for $N_c$ channel uses. $N_c$ depends generally on the coherence time and coherence frequency of the underlying wireless channel.

To correctly receive data communicated over a wireless channel, the effects of the channel on the transmission are sought to be substantially reversed. A common approach to this is a pilot-assisted transmission where pilot symbols are included in a transmission frame among coded and modulated data symbols. Before decoding of the data starts at the receiver, the receiver uses the known pilot symbols to estimate the channel, such that the thus derived channel estimate may be used to equalize the wireless channel prior to demodulating and decoding the received symbols.

Performance of a pilot-assisted transmission may be enhanced by using iterative channel estimation and decoding. Another option is the use of mismatched log-likelihood ratios, LLRs, these being the LLRs calculated by adopting imperfect channel state information as a true channel rule, to obtain a list of candidates which includes the transmitted message in a list, and the final decision is made by considering the pilots as a part of a codebook. However, when the message length is short, which is often the case for applications envisioned by ultra-reliable low-latency communications, for example, there is a loss in the rate of the underlying channel code due to the inclusion of pilots for estimating the channel state information, which degrades overall performance.

One approach to implementing the receiver side is joint channel estimation and decoding, JCED. JCED does not require embedded pilots for channel estimation, as polar code constraints, such as knowledge of frozen bits, or other known constraints may be used to estimate the channel via successive cancellation, SC, or SC list, SCL, decoding, for example. Frozen bits are bits known in advance to be set to a predetermined value(s), for example '0', which predetermined value(s) being know to the receiver. In other words, it is possible that a number of pilots $N_p = 0$ and a number of data symbols $N_d$ is the same as the number of symbols which fit in the coherence time and frequency, $N_d = N_c$. The estimation of the channel, detection of the symbols and decoding of the code block may all be accomplished jointly and successively in JCED, by benefiting from the knowledge of the constraints, such as frozen bits, dynamic frozen bits and/or parity equations. By dynamic frozen bits it is meant bits whose values depend on previously decoded bits. By parity equations it is meant equations which the decoded bits must fulfil. Simulations have verified that JCED yields benefits in form of reduced block error rate, BLER, stemming from the reduced pilot overhead, in various channel models. However, JCED leads to exponential complexity for the channel estimation phase relative to the number of channel coefficients a single packet experiences. In particular when the wireless channel exhibits multipath propagation and frequency selectivity, JCED receiver complexity is high (high number of diversity branches). Herein will be disclosed two-stage coding solutions with segmentation of the code blocks according to the channel coherence block size to benefit efficiently from the JCED methods, while simultaneously maintaining the coding gain available for larger code blocks.

One solution to the problem of JCED complexity would be to divide the message into small chunks and encode them separately so that the coded data would always fit in one channel coherence block and frequency selectivity within a single codeword would be avoided. This solution, however, reduces performance due to increased finite-block length effects, as the number of short message blocks becomes high. Further, diversity gains are lost in this solution.

Herein a concatenated coding solution is described, where a JCED process may be run at the receiver side. The concatenated coding solution involves an outer encoding and an inner encoding, as will be described herein below in more detail. The inner encoding is performed to facilitate a low-complexity estimation of the channel using code constraints, that is, dependencies between the coded bits, before decoding starts. Examples of these dependencies include constraints imposed by a parity check matrix in the case of an LDPC code, and knowledge of frozen bits or dynamic frozen bits in the case of polar codes. Then, the concatenated code is decoded in the receiver using a decoder suited to the implementation in question. Performance can be optimized by modifying rates of the inner and outer codes, as well as the number of pilot symbols and modulation format for a given pair of coherence time and number of diversity branches. The herein described solution takes advantage of the benefits of JCED in the presence of a frequency selective channel and hence enables a low-complexity solution for non-coherent communication.

The expressions outer coding (or first coding) and inner coding (or second coding), and respectively inner decoding (first decoding) and outer decoding (second decoding), are used herein to identify these coding and decoding stages of the concatenated code in relation to each other and their role in the overall concatenated code. Thus it is not intended to imply that the outer coding, for example, would involve mathematical operations that have an "outer" characteristic in some sense. The inner and outer codes may comprise error-correcting codes, for example but not necessarily of the same type. Further, in some embodiments, the concatenated code comprises more than two layers of coding, for example three layers: an outer layer, a middle layer and an inner layer.

In the concatenated coding scheme the input to the inner code encoder is segmented into multiple sub-blocks, each of which is encoded with a channel code whose block length is determined according to the coherence of the channel. Hence, the coding gain that is desired for larger code blocks is maintained since the concatenated code, including the inner code, may be used for error correction too. A further benefit of the concatenated coding mechanism described herein lies in an enhanced re-transmission request opportunity which enables requesting retransmission of individual ones of the inner codewords, rather than the entire outer codeword.

The concatenated coding scheme comprises performing at least two layers of channel encoding on data to be transmitted. The first encoding layer, referred to herein as the outer code, encodes the message at a coding rate $R_1$ and block length $N_1$. The resulting outer codeword is first interleaved, and then segmented into B sub-blocks, each of which is encoded using the second encoding layer, referred to herein as the inner code, at rate $R_2$ and block length $N_2$. $N_2$, modulation order and the number of pilot symbols, if any, may all be adapted to the coherence characteristics of the channel, that is, the length of the modulated sub-blocks should not exceed the coherence of the channel $N_c$ after embedding $N_p$ pilot symbols, wherein it is understood that the pilot symbols may be omitted, $N_p = 0$. Thus, in the concatenated coding scheme, the inner code length is at most matched to the coherence time and coherence frequency of the underlying wireless channel, such as one or more physical resource block, PRB, and one or more OFDM symbols, and the receiver uses the inner code first to estimate the channel using code constraints, together with the pilot symbols if used, and then to facilitate a decoder suited for the specific implementation at hand.

The rate of the resulting concatenated code is the multiplication of the rates of the inner and the outer codes, that is, $R = R_1 R_2$; and the codeword length of the resulting concatenated code is the multiplication of the codeword lengths of the inner and outer codes, that is, $N = N_1 N_2$. The overall transmission rate may be defined in bits per channel use, denoted as $R_{eff}$, by taking into account the pilot symbols and the adopted modulation order as well, where $R_{eff}$, $R_1$ and $R_2$ depend on the coherence block length and a selected complexity performance tradeoff.

At the receiver side, JCED algorithm work as follows. First, the pilots, if any, and the inner code constraints are exploited to estimate the channel, where, for instance, a polar code, such as a CRC-aided polar code, might be used. This is performed for the B subblocks independently to obtain B channel estimates. In practice, it may happen that one or more of the sub-blocks fail to be correctly decoded by the inner code. The receiver may be configured to discard the erroneous or unreliable sub-blocks at this stage. Once the channel estimates are obtained, the receiver may be configured to function in one of two modes: firstly, a suitable decoder may be used for the concatenated code to decode the message via the channel estimate obtained in the first phase or, secondly, the inner code decoding may be used to provide bit-wise LLRs using a soft-output decoding of the sub-blocks via the inner code decoding, which are followed by a de-interleave function and the outer code decoding to estimate the data. As an alternative embodiment of the second option, the receiver may be configured to output hard decisions for the outer decoder. In case of erroneous outer decoding and a retransmission request, the feedback may contain an index of erroneously decoded sub-blocks such that only these sub-blocks need to be retransmitted, yielding a saving in the quantity of retransmitted information.

For both modes described above, if the resulting LLR values from a sub-block are seen as unreliable, for example if an absolute value of likelihood values is below a desired threshold, the sub-block may be discarded. Alternatively, based on the estimated received channel of the corresponding coherence block, for example in case of a very poor received channel, a sub-block may be seen as unreliable and thus discarded.

The transmitter may obtain channel coherence information, usable in indicating or determining the channel coherence, in various ways. Overall finding a maximum value of the coherence block length, where the channel is assumed as being flat over time and frequency within the coherence block, maximizes gain from the JCED process. For example, a UE category may provide information on a speed of the respective UE, which as described herein above is associated with the coherence time such that higher UE speed results in a shorter coherence time. Further or alternatively, the transmitter may send reference symbols to the receiver prior to the transmission of the data using the concatenated code. By estimating the channel state of the wireless channel from the reference symbols, the receiver may determine the maximum observed coherence block $N_{c,max}$. Then, the optimal value for $N_c \leq N_{c,max}$ may be determined for the transmission accordingly. The receiver may provide to the transmitter either the channel state, such as the coherence time and coherence frequency, or the maximum value for the coherence block directly. The receiver may also advise the transmitter of decoding capabilities of the receiver, as different receivers may be capable of different levels of decoding complexity. Another option is that a preconfigured or pre-specified coherence block is used by the transmitter, for example as an initial coherence block size to be modified later on during continuing or repeated communication. In this case, depending on the carrier frequency, mobility class of the user, and deployment scenario such as urban or rural, a look-up table of maximum coherence block for each case may be used. For example, an assumption that one physical resource block, PRB, is the smallest coherence block can be used as starting point and revised upward during communication between the transmitter and the receiver.

In implementations where the wireless channel is reciprocal between the transmitter and the receiver, such as in case of time-division duplex systems, the transmitter may obtain channel coherence information, such as the coherence time and coherence frequency, by itself performing channel measurements prior to the transmission using the concatenated code.

To help the receiver correctly handle the data transmitted using the concatenated code, the transmitter is configured to transmit scheduling information associated with the transmission to the receiver. This scheduling information may include information indicative of the codeword length of the inner and outer codes. The scheduling information may also include information indicative of the code rates of the inner and outer codes. This information may be provided to the receiver using a physical downlink control channel, PDCCH, for example, when the transmitter is a base station or a UE. The scheduling information may be provided in a downlink control information, DCI, message, for example. When the transmitter is a UE and the receiver is a UE, a physical sidelink control channel, PSCCH, or a physical sidelink shared channel, PSSCH, may be used. The scheduling information may be provided in a sidelink control information, SCI, message, for example.

The transmitter may use a preconfigured number of pilots, or the transmitter may be configured to select a number of pilots to embed in the inner codewords dynamically. For example, a quality of service requirement of the data to be communicated may be used, such that a higher quality of service requirement leads to the transmitter embedding more pilots and a lower quality of service requirement leads to the transmitter embedding fewer pilots. In case the number of pilots is not dynamically selected, it may be known beforehand to both the receiver and the transmitter. In case the number of pilots is dynamically selected, the number of pilots may be included in the scheduling information provided from the transmitter to the receiver.

In some embodiments, the transmitter is configured to select a code rate for the inner code based at least in part on a received signal power or received signal quality, as measured at the receiver and reported to the transmitter. For example, if the signal is weak, a lower code rate may be used for the inner code, and when the signal is strong, a higher code rate may be used for the inner code. The modulation order $M$ may be determined from a transmission attribute of the user, where the compound code rate $R$ and modulation order $M$ may be derived from rate adaptation. Given $M$, $N_c$ and the pilot resource ratio $N_p/N_c$, the inner code rate $R_2$ may be chosen to maximize gain from JCED. Code rate $R_1$ may then be determined based on the relation $R_1 = R/R_2$ and $R_{eff}$ is determined by the considered modulation order and the pilot resource ratio. Alternatively, the inner and outer code rate tuple $(R_1, R_2)$ may be derived jointly to maximize the combined gain from the outer coding and the inner JCED, while satisfying $R_1 = R/R_2$. These two mechanisms for selecting the code rates may be preconfigured or solved offline to create look-up tables containing the two code rates $(R_1, R_2)$ for given $N_c$, $M$, $R$ values, for example. For a given $K$-bit message to be encoded and a rate $R$, where the rate is selected based on the underlying channel characterized by the number of diversity branches (or number of coherence blocks) $B$ and the coherence parameter $N_c$, the coding rates $R_1$ and $R_2$ can be chosen so that the complexity and performance trade-off is optimized.

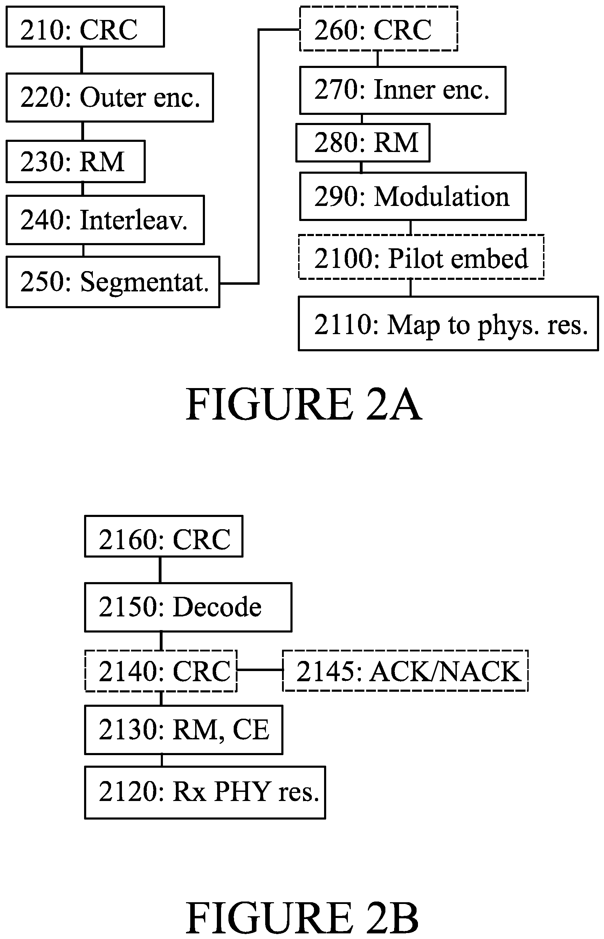

FIGURE 2A is a flow graph of a process in accordance with at least some embodiments of the present invention. The process of FIGURE 2A takes place at the transmitter end. Initially, in phase 210, a cyclic redundancy check, CRC, is attached to the data to be transmitted, to enable checking whether the message as a whole is successfully decoded in the receiver. In phase 220, the outer encoding is performed with rate $R_1$, as described herein above, to obtain the outer codeword. Subsequently in phase 230 a rate matching operation is carried out, and in phase 240 interleaving is performed on the outer codeword. In phase 250, the outer codeword is segmented, as described above, based on the coherence block length of the wireless channel that is intended to be used to obtain sub-blocks, and in phase 260 an optional attachment of sub-block CRC may be carried out. The segmenting may be performed to obtain the inner codeword length of at most the channel coherence block length, taking $R_2$ into account. In phase 270 the inner encoding is carried out at rate $R_2$ to obtain the inner codewords, and in phase 280 a rate-matching operation is carried out. Phases 290, 2000 and 2110 correspond to modulation, embedding of pilots in the inner codewords, and mapping of the inner codewords to physical resources of the corresponding coherence block. The pilot embedding of phase 2000 is optional, as described herein above.

FIGURE 2B is a flow graph of a process in accordance with at least some embodiments of the present invention. The process of FIGURE 2B takes place at the receiver end. Initially, in phase 2120, a modulated signal is received which carries modulation symbols. Subsequently, in phase 2130, rate de-matching and channel estimation are carried out, wherein the channel estimation is based at least in part on pilots and/or code constraints, as described herein above. The channel estimation is performed separately for each sub-block (or coherence block), and the received modulation symbols are equalized based on the respective channel estimates. An optional CRC check is performed in phase 2140 on the sub-blocks, such that, responsive to failed CRC, individual ones of the sub-blocks may be requested to be retransmitted from the transmitter, phase 2145, if CRC at phase 2160 fails. Where phase 2140 is absent, also phase 2145 is absent.

In phase 2150 the concatenated code with $R = R_1R_2$ is decoded, decoding the inner and outer encodings in one phase to obtain the data. A CRC check is performed on the data in phase 2160, to verify the data overall is correctly received. Overall this process corresponds to the option in the receiver where the JCED is performed on the concatenated code level.

In the process of FIGURE 2B, therefore, the inner code JCED operation is used solely to estimate the channel benefiting from the inner code constraints and pilots, if any, according to the following formulation:

$$\widehat{h_i} = \underset{h \in \mathbb{C}}{\mathrm{argmax}}\, p_{Y_i^{(p)}|X_i^{(p)},H_i}(\mathbf{y}_i^{(p)}|\mathbf{x}_i^{(p)}, h) \sum_{\mathbf{x} \in \mathcal{C}_i} p_{Y_i^{(d)}|X_i^{(d)},H_i}(\mathbf{y}_i^{(d)}|\mathbf{x}, h)$$

where $\mathcal{C}_i$ is the modulated codebook for the sub-block $i$. Further, $\mathbf{x}_i = (\mathbf{x}_i^{(p)}, \mathbf{x}_i^{(d)})$ and $\mathbf{y}_i = (\mathbf{y}_i^{(p)}, \mathbf{y}_i^{(d)})$ are the transmitted and received signals, respectively, of length $N_c$, and $h_i$ is the realization of the channel coefficient. The portion $\mathbf{x}_i^{(p)}$ corresponds to the pilots embedded into the sub-block known to the receiver to be used for channel estimation and $\mathbf{y}_i^{(p)}$ is the corresponding portion of the received signal. The superscript (d) denotes the portions of the signal containing the actual data. The estimator can be divided into two parts, where its amplitude $|\widehat{h_i}|$ is first approximated simply using the expected energy of the block, and the phase $\hat{\theta}_i$ can be approximated by rewriting the formula above by replacing $\widehat{h_i} = |\widehat{h_i}|e^{j\hat{\theta}_i}$. For a particular selection of $\mathcal{C}_i$, different approximations can be used with a suitable decoding function for the second term of the objective function, for example with polar codes. In the case of a generic code, one can restrict the calculation of the summation in the objective function above to a subset of $\mathcal{C}_i$, which can be implemented with any efficient decoder outputting a list of candidates at the end of the decoding, such as successive cancellation list or most-reliable basis decoding. Then, the combination of the outer code, interleave function and the inner code is treated as a single channel code for decoding the message.

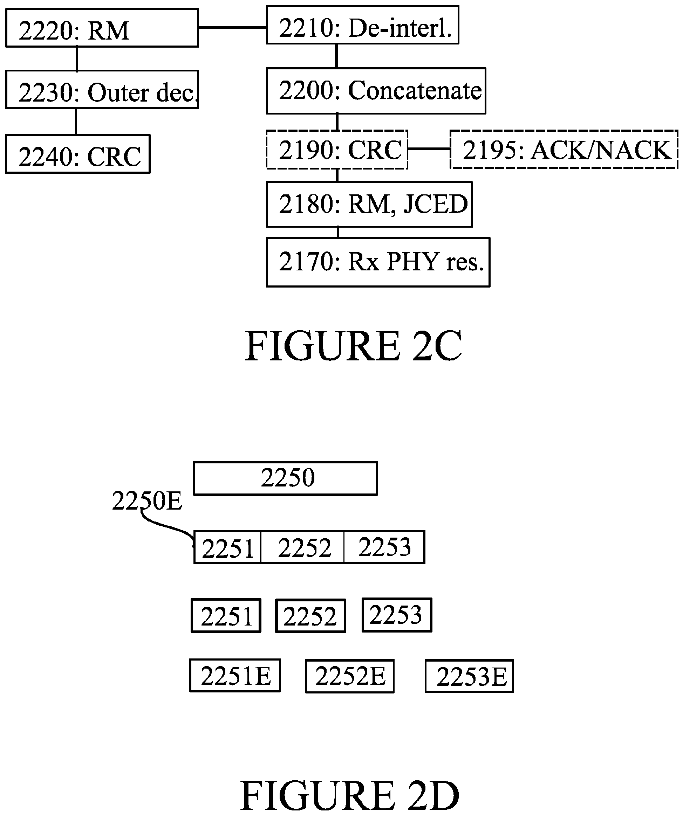

FIGURE 2C is a flow graph of a process in accordance with at least some embodiments of the present invention. The process of FIGURE 2C takes place in the receiver. Initially, in phase 2170, a modulated signal is received which carries modulation symbols. Subsequently, in phase 2180, rate de-matching and JCED are carried out for each sub-block, wherein the JCED is based at least in part on pilots and/or code constraints, as described herein above. This phase also comprises the inner decoding. An optional CRC check of the sub-blocks is carried out in phase 2190, such that responsive to failed CRC at phase 2230 individual ones of the sub-blocks may be requested to be retransmitted from the transmitter, phase 2195.

The sub-blocks are concatenated together in phase 2200 and the obtained data block is de-interleaved in phase 2210. Rate de-matching follows in phase 2220, and the outer decoding is performed in phase 2230, followed by a CRC check of the data as a whole, phase 2230.

FIGURE 2D is an example encoding process in accordance with at least some embodiments of the present invention. Initially, the data 2250 to be transmitted to the receiver is encoded in the outer encoding to obtain the outer codeword 2250E. This outer codeword is interleaved and segmented into segments 2251, 2252 and 2253, each of which are input to the inner encoding to obtain inner codewords 2251E, 2252E and 2253E. The number of segments, three, in FIGURE 2D is merely an example selected for the purpose of clarity of the illustration. The inner codewords 2251E, 2252E and 2253E are of a length selected so as to be less than or equal to the coherence block size of the wireless channel intended to be used in the transmission, as described herein above. The inner codewords may then be processed for transmission. In case pilots are to be embedded, the inner codewords 2251E, 2252E and 2253E with pilots embedded are of the length which is less than the coherence block size of the wireless channel.

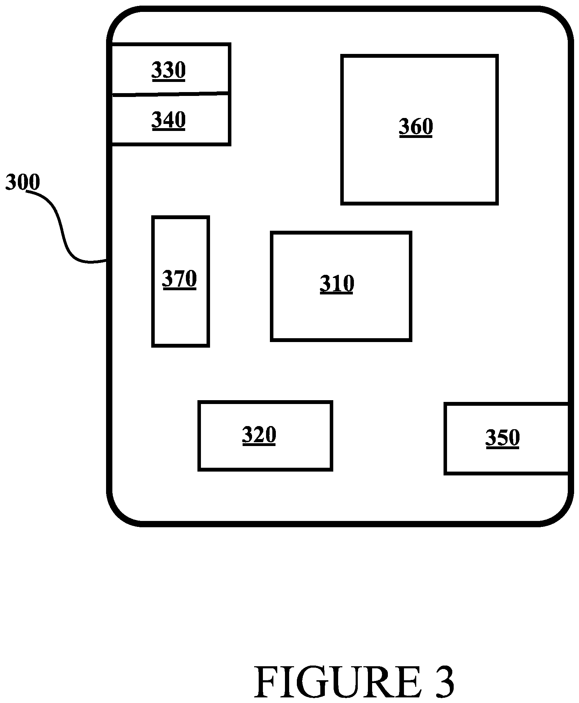

FIGURE 3 illustrates an example apparatus capable of supporting at least some embodiments of the present invention. Illustrated is device 300, which may comprise, for example, a mobile communication device such as UE 110 of FIGURE 1. Further, in applicable parts, device 300 may correspond to a base station, such as base station 130 of FIGURE 1. The UE and the base station may each perform as a transmitter or a receiver in the herein described concatenated code process. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. A processing core or processor may be, or may comprise, at least one qubit. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310, optionally together with memory and computer instructions, may be means for performing method steps in device 300, such as performing, obtaining, determining, transmitting, equalizing and assuming. Processor 310 may be configured, at least in part by computer instructions, to perform actions.

A processor may comprise, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may be a computer readable medium. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part external to device 300 but accessible to device 300. Memory 320 may be transitory or non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information and signals in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony and selfies. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

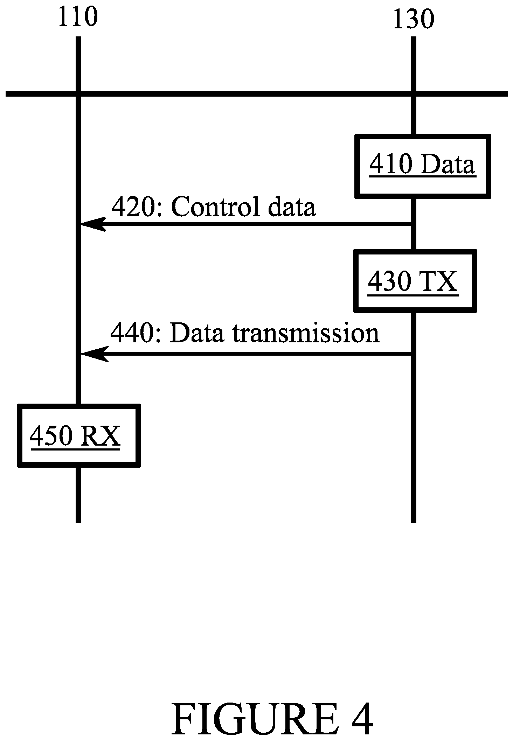

FIGURE 4 illustrates signalling in accordance with at least some embodiments of the present invention. On the vertical axes are disposed, on the left, UE 110 of FIGURE 1, and on the right, base station 130 of FIGURE 1. Time advances from the top toward the bottom.

In phase 410 the base station, acting in the example of FIGURE 4 as the transmitter, determines that it has data to be provided to UE 110, which acts as the receiver in the example of FIGURE 4. Base station 130 selects the parameters of the concatenated code-based transmission, as described herein above. In detail, base station 130 selects the coding rates of the inner and outer error-correction codes, and selects the lengths of the inner and outer codewords based at least in part on the channel coherence of the wireless channel between UE 110 and base station 130.

In phase 420 base station 130 informs UE 110 of the parameters of the concatenated code-based transmission, for example by providing suitable indications on a PDCCH. This control data may be referred to as scheduling information. In phase 430, base station 130 performs transmit-side processing of the concatenated code-based transmission. An example of such transmit-side processing has been described herein in connection with FIGURE 2A.

Phase 430 is followed by transmission 440, wherein the data, as processed in phase 430, is communicated to UE 110 in modulated form by performing a transmission based at least in part on the inner codewords. The transmission may be based on an OFDM RAT, for example. In phase 450 UE 110 performs receive-side processing of the concatenated code-based transmission. Examples of such receive-side processing have been described herein in connection with FIGUREs 2B and 2C.

Overall FIGURE 4 does not specify how the transmitter selects the codeword length of the inner encoding. When the wireless channel is reciprocal, the base station may estimate the channel coherence by performing measurements of the channel. On the other hand, when the wireless channel is not reciprocal, the base station may provide reference symbols to the receiver to facilitate estimation of the channel coherence by the receiver, which may then advise base station 130 of the channel coherence or a suitable codeword length of the inner encoding. Further, as noted above, at least initially a default codeword length may be selected for the inner encoding by the base station.

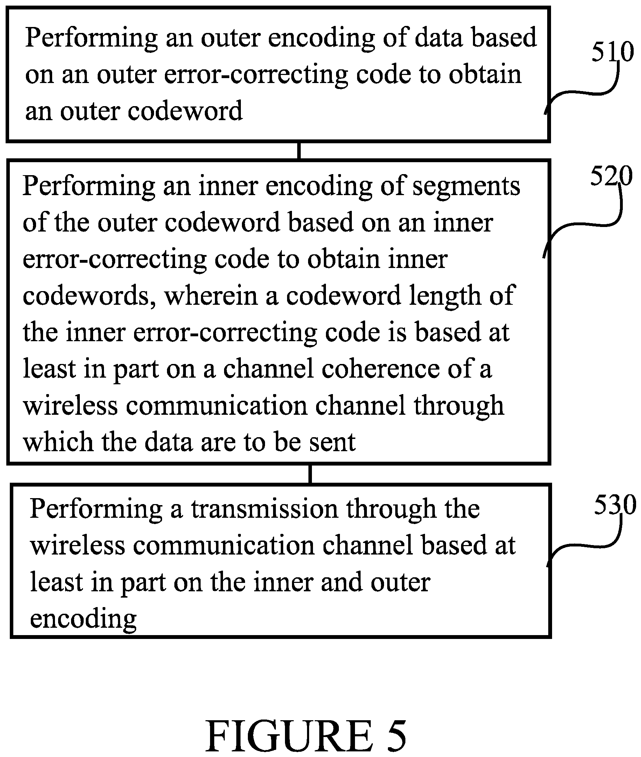

FIGURE 5 is a flow graph of a method in accordance with at least some embodiments of the present invention. The phases of the illustrated method may be performed by a device acting as a transmitter in the concatenated code-based transmission, such as UE 110 or base station 130. In some cases the method is performed in a control device configured to control the functioning of the device acting as the transmitter, when installed therein.

Phase 510 comprises performing an outer encoding of data based on an outer error-correcting code to obtain an outer codeword. Phase 520 comprises performing an inner encoding of segments of the outer codeword based on an inner error-correcting code to obtain inner codewords, wherein a codeword length of the inner error-correcting code is based at least in part on a channel coherence of a wireless communication channel through which the data are to be sent. Finally, phase 530 comprises performing a transmission through the wireless communication channel based at least in part on the inner and outer encoding. The transmission of phase 530 may be performed by a transmitter or transceiver, the transmitter or transceiver being a tangible hardware element.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

INDUSTRIAL APPLICABILITY

At least some embodiments of the present invention find industrial application in wireless communication.

ACRONYMS LIST

3GPP    3rd generation partnership project
JCED    joint channel estimation and decoding
LDPC    low-density parity-check code
LLR     log-likelihood ratios
OFDM    orthogonal frequency division multiplexing

REFERENCE SIGNS LIST

| 110 | user equipment, UE |
|---|---|
| 130, 135 | base station |
| 130A, 130B, 135A, 135B | cells |
| 140 | core network node |
| 150 | network |
| 210-2110 | phases of the processing of FIGURE 2A |
| 2120-2160 | phases of the processing of FIGURE 2B |
| 2170 - 2240 | phases of the processing of FIGURE 2C |
| 2250 | data |
| 2250E | outer codeword |
| 2251, 2252, 2253 | segments |
| 2251E, 2252E, 2253E | inner codewords |
| 300 - 370 | structure of the device of FIGURE 3 |
| 410 - 450 | phases of the process of FIGURE 4 |
| 510 - 530 | phases of the method of FIGURE 5 |

**Claims**

1.  An apparatus comprising at least one processing core and at least one memory storing instructions that, when executed by the at least one processing core, cause the apparatus at least to:

    - perform an outer encoding of data based on an outer error-correcting code to obtain an outer codeword;
    - perform an inner encoding of segments of the outer codeword based on an inner error-correcting code to obtain inner codewords, wherein a codeword length of the inner error-correcting code is based at least in part on a channel coherence of a wireless communication channel through which the data are to be sent; and
    - perform a transmission through the wireless communication channel based at least in part on the inner and outer encoding.

2.  The apparatus according to claim 1, wherein the apparatus is further caused at least to:

    - obtain channel coherence information indicative of the channel coherence of the wireless communication channel; and
    - determine the codeword length of the inner error-correcting code based at least in part of the channel coherence information.

3.  The apparatus according to claim 2, wherein the channel coherence information is obtained from a second apparatus to which the data are to be sent.

4.  The apparatus according to claim 2, wherein the apparatus is further caused at least to:

- obtain the channel coherence information based at least in part on channel measurements performed by the apparatus prior to the transmission.

5. The apparatus according to claim 2, wherein the channel coherence information comprises at least one of:

- a channel coherence in time domain; and
- a channel coherence in frequency domain.

6. The apparatus according to claim 1, wherein the apparatus is further caused at least to:

- obtain the codeword length of the inner error-correcting code from a second apparatus to which the data are to be sent.

7. The apparatus according to any of claims 1 to 6, wherein the apparatus is further caused at least to:

- transmit scheduling information associated with the transmission and including information indicative of the codeword length of the inner error-correcting code.

8. The apparatus according to any of claims 1 to 7, wherein a code rate of the inner error-correcting code is based at least in part on a received signal power or a received signal quality.

9. The apparatus according to any of claims 1 to 8, wherein the apparatus is further caused at least to:

- map the inner codewords onto respective blocks of resource elements for further transmission through the wireless communication channel, wherein a size in time domain and/or frequency domain of a respective block of resource elements is based at least in part on the channel coherence of the wireless communication channel.

10. The apparatus according to claim 9, wherein the apparatus is further caused at least to:

- determine the codeword length of the inner error-correcting code based at least in part on a number of resource elements in the respective block of resource elements, a number of pilot symbols inserted in the respective block of resource elements if any, and a modulation order used over the respective block of resource elements.

11. An apparatus comprising at least one processing core and at least one memory storing instructions that, when executed by the at least one processing core, cause the apparatus at least to:

- perform joint channel estimation and decoding of segments of received modulation symbols based on an inner error-correcting code to obtain channel estimates of a wireless communication channel through which the modulation symbols are received, wherein a codeword length of the inner error-correcting code is based on a channel coherence of the wireless communication channel.

12. The apparatus of claim 11, wherein the apparatus is further caused at least to:

- perform an inner decoding of the segments of received modulation symbols based on the inner error-correcting code to further obtain inner-decoded segments, and
- perform an outer decoding of the inner-decoded segments based on an outer error-correcting code to obtain data.

13. The apparatus of claim 11, wherein the apparatus is further caused at least to:

- equalize the received modulation symbols based on the channel estimates;
- perform decoding of the equalized received modulation symbols based on a concatenated error-correcting code that is a concatenation of at least the inner error-correcting code and an outer error-correcting code.

14. The apparatus according to claim 12, wherein the inner-decoded segments comprise hard values or soft values of decoded bits as output by the inner error-correcting code.

15. The apparatus according to claim 11, wherein the apparatus is caused to obtain the channel estimates based at least in part on constraints of the inner error-correcting code.

16. The apparatus according to claim 15, wherein the constraints of the inner error-correcting code comprises at least one of:

    - one or more frozen bits;
    - one or more dynamically frozen bits; and
    - one or more parity equations.

17. The apparatus according to claim 15 or 16, wherein the apparatus is caused to obtain the channel estimates further based on one or more received pilot symbols.

18. The apparatus according to any of claims 11 - 17, wherein the apparatus is further caused to assume that the wireless communication channel is constant over each one of the segments of received modulation symbols.

19. The apparatus according to any of claims 12 - 18, wherein the apparatus is further caused at least to:

    - request re-transmission of one or more, but not all, segments of an outer codeword as a response to channel estimation being poor or to inner decoding failing for the one or more of the segments of received modulation symbols as a response to, further, the outer decoding failing to correctly obtain the data.

20. A method comprising:

    - performing an outer encoding of data based on an outer error-correcting code to obtain an outer codeword;
    - performing an inner encoding of segments of the outer codeword based on an inner error-correcting code to obtain inner codewords, wherein a codeword length of the inner error-correcting code is based at least in part on a channel coherence of a wireless communication channel through which the data are to be sent; and
    - performing a transmission through the wireless communication channel based at least in part on the inner and outer encoding.

21. A method comprising:

    - performing joint channel estimation and decoding of segments of received modulation symbols based on an inner error-correcting code to obtain channel estimates of a wireless communication channel through which the modulation symbols are received, wherein a codeword length of the inner error-correcting code is based on a channel coherence of the wireless communication channel.

# FIGURE 1

210: CRC

220: Outer enc.

230: RM

240: Interleav.

250: Segmentat.

260: CRC

270: Inner enc.

280: RM

290: Modulation

2100: Pilot embed

2110: Map to phys. res.

# FIGURE 2A

2160: CRC

2150: Decode

2140: CRC —— 2145: ACK/NACK

2130: RM, CE

2120: Rx PHY res.

# FIGURE 2B

| 2220: RM | | 2210: De-interl. |
|---|---|---|
| 2230: Outer dec. | | 2200: Concatenate |
| 2240: CRC | | 2190: CRC |

2190: CRC ——— 2195: ACK/NACK

2180: RM, JCED

2170: Rx PHY res.

# FIGURE 2C

2250

2250E

| 2251 | 2252 | 2253 |

2251  2252  2253

2251E  2252E  2253E

# FIGURE 2D

FIGURE 3

110                                      130

410 Data

420: Control data

430 TX

440: Data transmission

450 RX

# FIGURE 4

Performing an outer encoding of data based on an outer error-correcting code to obtain an outer codeword    510

Performing an inner encoding of segments of the outer codeword based on an inner error-correcting code to obtain inner codewords, wherein a codeword length of the inner error-correcting code is based at least in part on a channel coherence of a wireless communication channel through which the data are to be sent    520

Performing a transmission through the wireless communication channel based at least in part on the inner and outer encoding    530

# FIGURE 5

**EUROPEAN SEARCH REPORT**

Application Number

EP 23 21 0113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JACOBSEN N ET AL: "Coded noncoherent communication with amplitude/phase modulation: from shannon theory to practical architectures", IEEE TRANSACTIONS ON COMMUNICATIONS, IEEE SERVICE CENTER, PISCATAWAY, NJ. USA, vol. 56, no. 12, 1 December 2008 (2008-12-01), pages 2040-2049, XP011239685, ISSN: 0090-6778, DOI: 10.1109/TCOMM.2008.040684 * Section I-III, Fig. 1 * ----- | 1-21 | INV. H04L1/00 |
| X | YEN-MING CHEN ET AL: "Turbo Coded Noncoherent Space-Time Modulation Using Information-Bearing Pilots and Spatial Multiplexing", IEEE TRANSACTIONS ON COMMUNICATIONS, IEEE SERVICE CENTER, PISCATAWAY, NJ. USA, vol. 59, no. 6, 1 June 2011 (2011-06-01), pages 1543-1554, XP011366483, ISSN: 0090-6778, DOI: 10.1109/TCOMM.2011.042111.100169 * Section I-III, Fig. 1, 4 * ----- | 1-21 | |
| X | US 8 582 596 B2 (AGRAWAL AVNEESH [US]; MALLADI DURGA PRASAD [US] ET AL.) 12 November 2013 (2013-11-12) * column 7, line 7 - column 9, line 67; figure 6 * ----- -/-- | 1-10,20 | TECHNICAL FIELDS SEARCHED (IPC) H04L |

The present search report has been drawn up for all claims

| Place of search | Date of completion of the search | Examiner |
|---|---|---|
| Munich | 8 April 2024 | Kreppel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 23 21 0113

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUAN PEIHONG ET AL: "Polar-Coded Non-Coherent Communication", IEEE COMMUNICATIONS LETTERS, IEEE SERVICE CENTER, PISCATAWAY, NJ, US, vol. 25, no. 6, 24 February 2021 (2021-02-24), pages 1786-1790, XP011859840, ISSN: 1089-7798, DOI: 10.1109/LCOMM.2021.3061650 [retrieved on 2021-06-09] * Section I-III, Fig. 1 * ----- | 1-21 | |

**TECHNICAL FIELDS
SEARCHED (IPC)**

The present search report has been drawn up for all claims

| Place of search | Date of completion of the search | Examiner |
|---|---|---|
| Munich | 8 April 2024 | Kreppel, Jan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**page 2 of 2**

## ANNEX TO THE EUROPEAN SEARCH REPORT
## ON EUROPEAN PATENT APPLICATION NO.

EP 23 21 0113

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2024

| Patent document cited in search report | | Publication date | Patent family member(s) | | Publication date |
|---|---|---|---|---|---|
| US 8582596 | B2 | 12-11-2013 | AU | 2005253591 A1 | 22-12-2005 |
| | | | AU | 2005253594 A1 | 22-12-2005 |
| | | | AU | 2005253595 A1 | 22-12-2005 |
| | | | AU | 2005253596 A1 | 22-12-2005 |
| | | | AU | 2005253597 A1 | 22-12-2005 |
| | | | AU | 2009217481 A1 | 15-10-2009 |
| | | | BR | PI0511735 A | 08-01-2008 |
| | | | BR | PI0511736 A | 08-01-2008 |
| | | | BR | PI0511809 A | 15-01-2008 |
| | | | BR | PI0511810 A | 26-12-2007 |
| | | | BR | PI0511811 A | 26-12-2007 |
| | | | CA | 2569384 A1 | 22-12-2005 |
| | | | CA | 2569454 A1 | 22-12-2005 |
| | | | CA | 2569455 A1 | 22-12-2005 |
| | | | CA | 2569456 A1 | 22-12-2005 |
| | | | CA | 2569457 A1 | 22-12-2005 |
| | | | CA | 2741485 A1 | 22-12-2005 |
| | | | CN | 1993916 A | 04-07-2007 |
| | | | CN | 1993919 A | 04-07-2007 |
| | | | CN | 1993955 A | 04-07-2007 |
| | | | CN | 1994014 A | 04-07-2007 |
| | | | CN | 101002448 A | 18-07-2007 |
| | | | CN | 101714880 A | 26-05-2010 |
| | | | CN | 103441814 A | 11-12-2013 |
| | | | DK | 1751906 T3 | 14-12-2020 |
| | | | EP | 1751902 A1 | 14-02-2007 |
| | | | EP | 1751906 A2 | 14-02-2007 |
| | | | EP | 1751942 A1 | 14-02-2007 |
| | | | EP | 1752011 A1 | 14-02-2007 |
| | | | EP | 1757057 A1 | 28-02-2007 |
| | | | EP | 2512042 A1 | 17-10-2012 |
| | | | ES | 2845145 T3 | 26-07-2021 |
| | | | HK | 1104714 A1 | 18-01-2008 |
| | | | HK | 1104715 A1 | 18-01-2008 |
| | | | HU | E052544 T2 | 28-05-2021 |
| | | | IL | 179710 A | 31-10-2011 |
| | | | IL | 179770 A | 31-08-2014 |
| | | | IL | 179800 A | 31-01-2011 |
| | | | IL | 179802 A | 29-12-2011 |
| | | | IL | 179803 A | 28-04-2011 |
| | | | JP | 4612046 B2 | 12-01-2011 |
| | | | JP | 4653165 B2 | 16-03-2011 |
| | | | JP | 4903693 B2 | 28-03-2012 |
| | | | JP | 5269856 B2 | 21-08-2013 |
| | | | JP | 5356325 B2 | 04-12-2013 |
| | | | JP | 5774631 B2 | 09-09-2015 |

For more details about this annex : see Official Journal of the European Patent Office, No. 12/82

page 1 of 3

## ANNEX TO THE EUROPEAN SEARCH REPORT
## ON EUROPEAN PATENT APPLICATION NO.

EP 23 21 0113

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2024

| Patent document cited in search report | Publication date | Patent family member(s) | | Publication date |
|---|---|---|---|---|
| | | JP | 5908631 B2 | 26-04-2016 |
| | | JP | 2008502220 A | 24-01-2008 |
| | | JP | 2008502222 A | 24-01-2008 |
| | | JP | 2008502223 A | 24-01-2008 |
| | | JP | 2008502224 A | 24-01-2008 |
| | | JP | 2008502225 A | 24-01-2008 |
| | | JP | 2010263652 A | 18-11-2010 |
| | | JP | 2011091817 A | 06-05-2011 |
| | | JP | 2011124992 A | 23-06-2011 |
| | | JP | 2013179635 A | 09-09-2013 |
| | | JP | 2015156680 A | 27-08-2015 |
| | | KR | 20070037613 A | 05-04-2007 |
| | | KR | 20070041711 A | 19-04-2007 |
| | | KR | 20070042528 A | 23-04-2007 |
| | | KR | 20070042529 A | 23-04-2007 |
| | | KR | 20070043964 A | 26-04-2007 |
| | | MY | 145506 A | 29-02-2012 |
| | | MY | 146305 A | 31-07-2012 |
| | | MY | 146700 A | 14-09-2012 |
| | | MY | 161833 A | 15-05-2017 |
| | | MY | 176973 A | 28-08-2020 |
| | | PL | 1751906 T3 | 19-04-2021 |
| | | PT | 1751906 T | 15-12-2020 |
| | | RU | 2360376 C2 | 27-06-2009 |
| | | RU | 2369030 C2 | 27-09-2009 |
| | | RU | 2369031 C2 | 27-09-2009 |
| | | RU | 2371858 C2 | 27-10-2009 |
| | | RU | 2006146676 A | 20-07-2008 |
| | | RU | 2009120942 A | 10-12-2010 |
| | | RU | 2009123155 A | 27-12-2010 |
| | | SI | 1751906 T1 | 26-02-2021 |
| | | TW | I361014 B | 21-03-2012 |
| | | TW | I364930 B | 21-05-2012 |
| | | TW | I373947 B | 01-10-2012 |
| | | TW | 200620872 A | 16-06-2006 |
| | | TW | 200623683 A | 01-07-2006 |
| | | TW | 201208458 A | 16-02-2012 |
| | | UA | 85241 C2 | 12-01-2009 |
| | | UA | 91509 C2 | 10-08-2010 |
| | | UA | 91510 C2 | 10-08-2010 |
| | | UA | 92323 C2 | 25-10-2010 |
| | | UA | 102074 C2 | 10-06-2013 |
| | | US | 2006013168 A1 | 19-01-2006 |
| | | US | 2006013186 A1 | 19-01-2006 |
| | | US | 2006013325 A1 | 19-01-2006 |
| | | US | 2006018269 A1 | 26-01-2006 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 23 21 0113

08-04-2024

| Patent document cited in search report | Publication date | Patent family member(s) | | Publication date |
|---|---|---|---|---|
| | | US | 2006018279 A1 | 26-01-2006 |
| | | US | 2009304120 A1 | 10-12-2009 |
| | | WO | 2005122425 A2 | 22-12-2005 |
| | | WO | 2005122458 A1 | 22-12-2005 |
| | | WO | 2005122516 A1 | 22-12-2005 |
| | | WO | 2005122517 A1 | 22-12-2005 |
| | | WO | 2005122627 A1 | 22-12-2005 |

For more details about this annex : see Official Journal of the European Patent Office, No. 12/82